# EUROPÄISCHE PATENTSCHRIFT

(11) **EP 2 953 744 B1**
(45) Veröffentlichungstag und Bekanntmachung des Hinweises auf die Patenterteilung: **01.03.2017**
(21) Anmeldenummer: 14708799.3
(22) Anmeldetag: 03.02.2014
(51) Int. Cl.: B21K 1/46, C21D 7/10, F16B 25/00, F16B 35/04

(54) **VERFAHREN ZUR ERHÖHUNG EINER FESTIGKEIT EINES STIFTFÖRMIGEN BEFESTIGUNGSELEMENTS AUS METALL, INSBESONDERE EINER SCHRAUBE**
METHOD FOR INCREASING THE STRENGTH OF A ROD-LIKE FASTENING ELEMENT MADE OF METAL, IN PARTICULAR OF A SCREW
PROCÉDÉ D'AUGMENTATION DE LA RIGIDITÉ D'UN ÉLÉMENT DE FIXATION MÉTALLIQUE EN FORME DE TIGE, EN PARTICULIER D'UNE VIS

(30) Priorität: 08.02.2013 DE 102013101264
(43) Veröffentlichungstag der Anmeldung: 16.12.2015
(73) Patentinhaber: fischerwerke GmbH & Co. KG, 72178 Waldachtal (DE)
(72) Erfinder: ESSIG, Simon, 72178 Waldachtal (DE); SINGER, Harald, 79331 Teningen (DE)
(86) Internationale Anmeldenummer: PCT/EP2014/000270
(87) Internationale Veröffentlichungsnummer: WO 2014/121913

(56) Entgegenhaltungen:
- DE-A1- 2 555 322
- GB-A- 430 124
- US-A- 3 310 822

## Beschreibung

Die Erfindung betrifft ein Verfahren zur Erhöhung einer Festigkeit eines stiftförmigen Befestigungselements aus Metall mit den Merkmalen des Oberbegriffs des Anspruchs 1. Durch dieses Verfahren kann ein stiftförmiges Befestigungselement aus Metall, speziell eine Schraube hergestellt werden.

Schrauben aus Stahl, allgemein aus Metall einschließlich metallischer Legierungen, sind bekannt. Sie weisen einen Schraubenkopf an einem Ende und ein Gewinde auf. Das Gewinde kann bis zum Kopf reichen oder es ist ein gewindeloser Schaft zwischen dem Kopf und dem Gewinde vorhanden. Die Erfindung richtet sich insbesondere auf letztere Schrauben bzw. allgemein auf stiftförmige Befestigungselemente aus Metall. Das können außer Schrauben beispielsweise auch Anker, Spreizanker, Ankerschäfte, Ankerstangen sein. Die Aufzählung ist nicht abschließend.

Es ist die Herstellung von Schrauben aus Walzdraht bekannt, d.h. aus einem durch Umformen aus einem Rohling hergestellten Draht. Der Walzdraht oder auch ein sonstiger Draht wird anschließend gezogen, d.h. durch Beanspruchung auf Zug umgeformt. Dabei streckt sich der Draht, d.h. er verlängert sich und verkleinert seinen Querschnitt. Zugfestigkeit und Streckgrenze des Drahts, d.h. eine Festigkeit, erhöhen sich durch das Ziehen, d.h. das Zugumformen. Nach dem Ziehen werden das Gewinde und der Kopf hergestellt, wobei die Reihenfolge grundsätzlich beliebig ist und auch gleichzeitig erfolgen kann. Die Gewindeherstellung ist spanend möglich, normalerweise wird das Gewinde gewalzt, was auch als "Gewinderollen" bezeichnet wird. Das Gewindewalzen ist ebenfalls ein Umformen. Allerdings ist die Art der Gewindeherstellung und ob überhaupt ein Gewinde hergestellt oder ein gewindeloses stiftförmiges Befestigungselement aus Metall hergestellt wird, für die Erfindung nicht von Bedeutung. Die Herstellung des Kopfs ist durch Stauchen bekannt, wobei der Kopf in einem oder mehreren Schritten gestaucht werden kann. Das Stauchen ist ebenfalls ein Umformen, wobei hier zum ersten Mal durch eine Druckkraft umgeformt wird. Beim Stauchen des Kopfs wird der Schaft der Schraube ebenfalls gestaucht, er wird mit der Stauchkraft, die eine Druckkraft ist, beaufschlagt. Während die Zugfestigkeit der Schraube sich durch das Stauchen nahezu nicht ändert, verringert sich die Streckgrenze deutlich in dem Bereich des Schafts, der mit der Stauchkraft beaufschlagt ist. Die Verringerung der Streckgrenze hat eine entsprechende Verringerung einer Biegesteifigkeit der Schraube zur Folge.

Ursache der Verringerung der Streckgrenze ist vermutlich der sogenannte Bauschinger-Effekt. Der Bauschinger-Effekt tritt auf, wenn ein Metall plastisch verformt wird. Danach ist bei einer Verformung in entgegengesetzter Richtung die Elastizitätsgrenze und damit die Streckgrenze verkleinert. Bei der Schraubenherstellung wird der Draht gezogen, d.h. zugumgeformt, und danach zumindest ein Teil des Drahts, der einen Schaft der Schraube bildet, beim Stauchen des Kopfs auf Druck beansprucht. Das Stauchen des Kopfs, das auch den Schaft der Schraube beaufschlagt, setzt eine Elastizitätsgrenze bei einer anschließenden Zugbeanspruchung des Schafts herab, Streckgrenze und Biegesteifigkeit sind verkleinert.

Aus der Druckschrift GB 430 124 A ist ein Herstellungsverfahren für eine Schraube bekannt, bei der ein Drahtstück durch mehrfaches Durchdrücken durch eine Matrize im Durchmesser reduziert und der Kopf der Schraube angestaucht wird. Um die Ausbildung einer Schulter nahe des Kopfes zu vermeiden, schlägt die Druckschrift vor, nach dem Anstauchen des Kopfes den kopfnahen Teil des Schaft durch Durchdrücken dem Durchmesser des restlichen Schafts anzugleichen.

Aufgabe der Erfindung ist, die Streckgrenze nach dem Stauchen des Kopfs oder allgemein nach einer Zug- und einer nachfolgenden Druckumformung wieder zu erhöhen.

Gelöst wird die Aufgabe durch das im Anspruch 1 angegebene Verfahren. Wie bekannt wird eine Schraube aus Metall durch Ziehen eines Drahts, Herstellen eines Gewindes und Stauchen eines Kopfs hergestellt, wobei das Gewinde vor, nach oder gleichzeitig mit dem Kopf hergestellt werden kann. Erfindungsgemäß wird nach dem Stauchen des Kopfs durch Umformen ein Querschnitt des Schafts der Schraube oder allgemein ein Querschnitt eines stiftförmigen Befestigungselements durch Umformen, d.h. ein plastisches Verformen, verkleinert. Der Querschnitt erfolgt nicht auf der gesamten Länge des stiftförmigen Befestigungselements, sondern auf einem begrenzten Längsbereich, der sich unmittelbar oder mit kurzem Abstand an den Kopf anschließt. Es hat sich gezeigt, dass sich die Streckgrenze bei der Verkleinerung des Querschnitts durch Umformen wieder erhöht, wobei die Streckgrenze den Wert vor dem Stauchen des Kopfs erreichen oder sogar darüber hinaus gehen kann. Die Zugfestigkeit bleibt in etwa unverändert. Mit der Vergrößerung der Streckgrenze bei gleichbleibender Zugfestigkeit erhöht sich die Biegefestigkeit der Schraube.

Die Erfindung beschränkt sich nicht auf eine Schraube, sondern ist wie bereits erwähnt allgemein auf ein stiftförmiges Befestigungselement aus Metall gerichtet. Anstatt eines Kopfs kann durch Stauchen allgemein eine Querschnittsvergrößerung geformt werden, außer einem Kopf beispielsweise ein Flansch oder ein umlaufender Wulst. Die Querschnittsvergrößerung muss nicht an einem Ende des stiftförmigen Befestigungselements sein.

Nicht von Bedeutung für die Erfindung ist, ob die Vergrößerung der Streckgrenze Folge des Bauschinger-Effekts oder einer Umkehrung des Bauschinger-Effekts ist, d.h. einer Beanspruchung beim Stauchen des Kopfs auf Druck und anschließend einer Beanspruchung in entgegengesetzter Richtung, d.h. einer Zugbeanspruchung beim Verkleinern des Querschnitts. Eine denkbare andere Erklärung ist eine Erhöhung der Streckgrenze oder allgemein der Festigkeit vergleichbar der beim Walzen. Vorzugsweise wird der Querschnitt nur wenig verkleinert, wobei als "wenig" eine Verkleinerung im Bereich von 1/10 mm bzw. im Bereich von etwa 1-2% eines Quermessers anzusehen ist. Eine Ausgestaltung der Erfindung sieht eine Verkleinerung des Durchmessers durch Ziehen oder vorzugsweise durch Durchdrücken, beispielsweise durch Fließpressen oder vorzugsweise Strangpressen, vor.

Wie erläutert, sieht die Erfindung insbesondere die Herstellung einer Schraube vor. Ebenfalls umfasst ist die Herstellung allgemein eines stiftförmigen Befestigungselements gerichtet, an dem durch Stauchen ein Kopf, ein Spreizkegel oder eine andere Querschnittsvergrößerung geformt wird, dem eine Zugumformung vorausgehen kann. Solche Befestigungselemente können Bolzen, Stifte, Anker, Ankerschäfte und dgl. mehr sein.

Bei der Herstellung einer Schraube sieht eine Ausgestaltung der Erfindung vor, dass nach einem Stauchen des Kopfs der Querschnitt eines Schafts der Schraube zwischen dem Kopf und einem Gewinde der Schraube erfindungsgemäß durch Umformen verkleinert wird.

Aus fertigungstechnischen Gründen sieht eine Ausgestaltung der Erfindung die Verkleinerung des Querschnitts bis nahe an den Kopf oder allgemein bis nahe an die Querschnittsvergrößerung vor, so dass die Verkleinerung des Querschnitts mit kurzem Abstand vom Kopf oder allgemein der Querschnittsvergrößerung endet. Bei einer Beanspruchung der Schraube auf Biegung geht eine Biegespannung zum Kopf der Schraube hin gegen Null, weswegen nahe am Kopf eine hohe Festigkeit bzw. eine große Streckgrenze von geringer Bedeutung ist.

Mit dem erfindungsgemäßen Verfahren kann ein stiftförmiges Befestigungselement aus Metall hergestellt werden.

Herstellbar ist insbesondere eine Schraube aus Metall, die eine Durchmesserverkleinerung aufweist, die mit kurzem Abstand von einem Kopf der Schraube endet und mit einem Konus, der auch ballig oder hohlrund sein kann, eventuell gefolgt von einem zylindrischen Abschnitt, in eine Unterseite des Kopfs der Schraube übergeht. Der Übergang vom Schaft zum Kopf mit dem kurzen Konus und eventuell dem kurzen zylindrischen Abschnitt entsteht beispielsweise beim Durchdrücken an einer Mündung einer verwendeten Matrize.

Eine Ausgestaltung sieht vor, dass ein Querschnitt bzw. Durchmesser des gewindelosen Schafts der Schraube nach Stauchen des Kopfs durch Umformen auf den Durchmesser eines Kerns des Gewindes der Schraube verkleinert wird. Ändert sich der Durchmesser des Kerns über eine Länge des Gewindes, wird der Durchmesser des gewindelosen Schafts auf den Durchmesser am hinteren Ende des Kerns, an dem der Kern des Gewindes in den gewindelosen Schaft übergeht, verkleinert. Erkennbar ist diese Ausgestaltung der Erfindung daran, dass die Schraube keine Durchmesseränderung am Übergang vom Kern des Gewindes in den gewindelosen Schaft aufweist.

Die Erfindung wird nachfolgend anhand eines in der Zeichnung dargestellten Ausführungsbeispiels näher erläutert. Die Figuren zeigen aufeinanderfolgende Herstellungsstufen:
- Figur 1: zeigt einen Walzdraht;
- Figur 2: den Draht aus Figur 1 nach einer Zugumformung;
- Figur 3: einen aus dem Draht geformten Schraubenrohling; und
- Figur 4: eine aus dem Schraubenrohling erfindungsgemäß hergestellte Schraube.

### Die Figuren sind vereinfachte Schemadarstellungen.

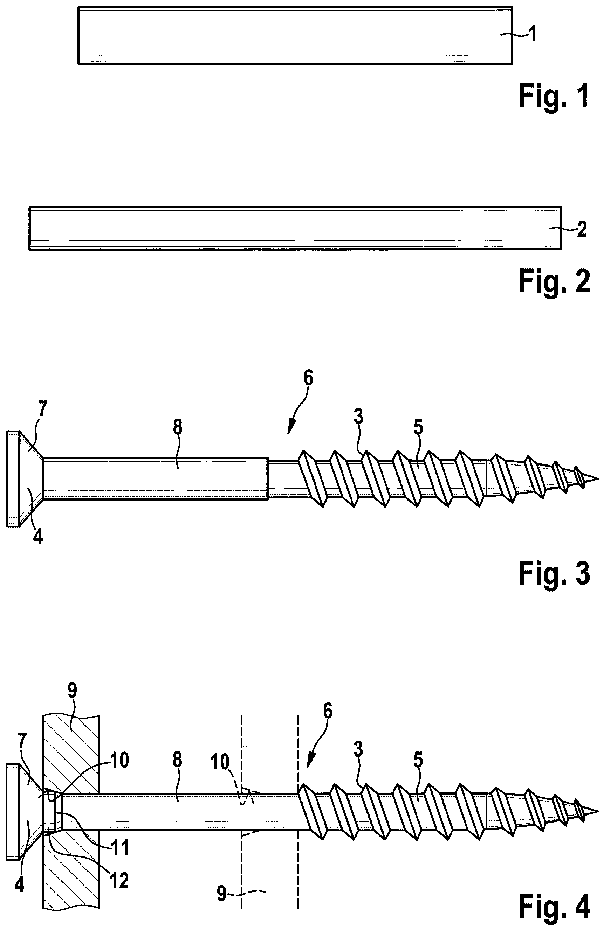

Ausgangsprodukt des erfindungsgemäßen Verfahrens ist im nachfolgend erläuterten Ausführungsbeispiel der Erfindung ein gewalzter Draht 1 aus Stahl, einem Cq15Mn-Stahl, mit kreisförmigem Querschnitt, wie ihn Figur 1 zeigt, im Ausführungsbeispiel mit einem Durchmesser von 7,5 mm. Ein solcher Draht 1 wird auch als Walzdraht bezeichnet. In einem ersten Verfahrensschritt wird der Draht 1 zugumgeformt, d.h. durch eine Zugbeanspruchung plastisch verformt und kann jetzt auch als gezogener Draht 2 bezeichnet werden (Figur 2). Sein Durchmesser verringert sich im Ausführungsbeispiel auf 6,4 mm, also um 15%, die Zugfestigkeit Rₘ erhöht sich dabei von 490 N/mm² auf 670 N/mm², d.h. um mehr als ein Drittel und die 0,2% Dehngrenze R_{p 0},₂, die hier anstelle der Streckgrenze Rₑ verwendet wird, erhöht sich durch die Zugumformung von 310 N/mm² auf 550 N/mm², d.h. um fast 80%.

Nach der Zugumformung des Drahts 2 wird durch Rollen ein Gewinde 3 und durch Stauchen ein Kopf 4 geformt (Figur 3). Das Gewinderollen ist wie das Zugumformen ein Umformverfahren, im Ausführungsbeispiel ist das Gewinde 3 ein Holzschraubengewinde mit einem Gewindedurchmesser von 7 mm und einem Durchmesser eines Kerns 5 des Gewindes 3, der auch als Kerndurchmesser oder Gewindekerndurchmesser bezeichnet werden kann, von 6,3 mm. Der Durchmesser des Kerns 5 hat sich durch das Gewinderollen also von 6,4 mm des gezogenen Drahts 2 auf 6,3 mm des Kerns 5 des Gewindes 3 verkleinert.

Der Kopf 4 der Schraube 6 kann vor, gleichzeitig mit oder nach dem Rollen des Gewindes 3 gestaucht werden. Im Ausführungsbeispiel ist der Kopf 4 ein Senkkopf mit einer kegelstumpfförmigen Unterseite 7. Im Ausführungsbeispiel wird der Kopf 4 in zwei Schritten gestaucht. Beim Stauchen des Kopfs 4 wird die Schraube 6 im Bereich des Gewindes 3 axial abgestützt, ein gewindeloser Schaft 8 zwischen dem Gewinde 3 und dem Kopf 4 wird mit einer Stauchkraft, die zum Stauchen des Kopfs 4 ausgeübt wird, beaufschlagt. Die Stauchkraft ist eine Druckkraft. Beim Stauchen wird der Schaft 8 radial von einem nicht dargestellten Rohr gegen Aufweiten und Knicken gestützt.

Nach dem Gewinderollen und dem Stauchen des Kopfs 4 ist die Zugfestigkeit Rₘ im Bereich des Gewindes 3 nahezu unverändert, im Ausführungsbeispiel hat sie sich um 20 N/mm² von 670 N/mm² des gezogenen Drahts 2 auf 690 N/mm² im Bereich des Gewindes 3 der Schraube 6 erhöht. Im Bereich des gewindelosen Schafts 8 ist die Zugfestigkeit Rₘ mit 670 N/mm² unverändert gegenüber dem gezogenen Draht 2. Die 0,2% Dehngrenze R_{p 0},₂ hat sich durch das Gewinderollen von 550 N/mm² des gezogenen Drahts 2 auf 660 N/mm² im Bereich des Gewindes 3 der Schraube 6, d.h. um 20% erhöht. Im Unterschied dazu hat sich die 0,2% Dehngrenze R_{p 0},₂ durch das Stauchen des Kopfs 4 im Bereich des gewindelosen Schafts 8 der Schraube 6 von 550 N/mm² des gezogenen Drahts 2 auf 430 N/mm² des gewindelosen Schafts 8 verringert, also um 22%. Mit der Abnahme der Dehngrenze bzw. Streckgrenze nimmt auch eine Biegesteifigkeit des gewindelosen Schafts 8 der Schraube 6 ab, für die das Verhältnis von Zugfestigkeit zu Dehn- oder Streckgrenze maßgeblich ist.

Nach dem Stauchen des Kopfs 4 wird ein Durchmesser des gewindelosen Schafts 8 durch Umformen verkleinert. Im Ausführungsbeispiel wird der Durchmesser des gewindelosen Schafts 8 der Schraube 6 durch Durchdrücken durch eine Matrize 9 (Strangpressen) verkleinert (Figur 4). Die Matrize 9 ist zweiteilig und wird unmittelbar hinter dem Gewinde 3 am gewindelosen Schaft 8 angesetzt, wie in der Mitte von Figur 4 mit Strichlinien angedeutet, und die Schraube 6 durch die Matrize 9 gedrückt. Es kann auch umgekehrt die Matrize 9 zum Kopf 4 der Schraube 6 bewegt und die Schraube 6 gehalten werden. In einer Endstellung liegt die Matrize 9 wie in Figur 4 links zu sehen an der Unterseite 7 des Kopfs 4 der Schraube 6 an. Der Durchmesser des gewindelosen Schafts 8 der Schraube 6 zwischen dem Gewinde 3 und dem Kopf 4 wird um ein oder wenige Zehntel Millimeter oder weniger bzw. um etwa 1-2% des Durchmessers verkleinert. Im Ausführungsbeispiel wird der Durchmesser des gewindelosen Schafts 6 um 0,1 mm von 6,4 mm auf 6,3 mm, d.h. um etwa 1,5% verkleinert. Ein anderes Maß ist eine Verkleinerung des Durchmesser des gewindelosen Schafts 8 auf den Durchmesser des Kerns 5 des Gewindes 3 am hinteren Ende des Gewindes 3, also am Übergang vom Gewinde 3 in den gewindelosen Schaft 8. In diesem Fall besteht keine Durchmesseränderung mehr zwischen dem Kern 5 des Gewindes 3 und dem gewindelosen Schaft 8 der Schraube 6, jedenfalls ist keine Durchmesseränderung vom Kern 5 des Gewindes 3 in den gewindelosen Schaft 8 der Schraube 6 erkennbar.

Durch die an sich geringe Verkleinerung des Durchmesser des gewindelosen Schafts 8 der Schraube 6 zwischen dem Gewinde 3 und dem Kopf 4 durch Umformen erhöht sich die Festigkeit des Schafts 8; die Zugfestigkeit Rₘ erhöht sich im Ausführungsbeispiel bei einer aus Stahl bestehenden Schraube 6 mit einem Schaftdurchmesser von 6,4 bzw. 6,3 mm und einem Gewindedurchmesser von 7 mm um über 4% von 670 N/mm² auf 700 N/mm² und die 0,2% Dehngrenze R_{p 0},₂ um über 200 N/mm² bzw. um über 50% von 430 N/mm² auf 650 N/mm². Damit ist die 0,2% Dehngrenze R_{p 0},₂ größer als die 0,2% Dehngrenze R_{p 0},₂ des gezogenen Drahts 2.

Beim Durchdrücken zur Verkleinerung des Durchmessers des gewindelosen Schafts 8 der Schraube 6 wird die Schraube 6 gegenüberliegend der Matrize 9 so weit bewegt, bis die Matrize 9 an der Unterseite 7 des Kopfs 4 der Schraube 6 anliegt, wie es in Figur 4 links gezeichnet ist. Auf ihrer dem Kopf 4 zugewandten Seite weist die Matrize 9 eine konische Mündung 10 auf, innerhalb der der Durchmesser des gewindelosen Schafts 8 verkleinert wird. Die konische Mündung 10 formt einen kurzen kegelstumpfförmigen Abschnitt 11 mit einer Länge von etwa 1 oder 2 mm am gewindelosen Schaft 8 der Schraube 6 unterhalb des Kopfs 4. Öffnet sich die konische Mündung 10 der Matrize 9 auf einen größeren Durchmesser als den Durchmesser des gewindelosen Schafts 8 der Schraube 6 vor der Verkleinerung seines Durchmessers, im Ausführungsbeispiel also auf mehr als einen Durchmesser von 6,4 mm, verbleibt zwischen der Unterseite 7 des Kopfs 4 und dem kegelstumpfförmigen Abschnitt 11 des Schafts 8, weil die Matrize 9 an der Unterseite 7 des Kopfs 4 anstößt, ein kurzer zylindrischer Abschnitt 12, der unverändert den Durchmesser des Schafts 8 vor der Verkleinerung seines Durchmessers aufweist, im Ausführungsbeispiel also einen Durchmesser von 6,4 mm. Dieser zylindrische Abschnitt 12 hat ebenfalls eine axiale Länge von etwa 1 oder 2 mm. Erweitert sich die konische Mündung 10 der Matrize 9 auf den Durchmesser des gewindelosen Schafts 8 der Schraube 6 vor der Verkleinerung seines Durchmessers, geht der kegelstumpfförmige Abschnitt 11 des gewindelosen Schafts 8 unmittelbar, d.h. ohne den zylindrischen Abschnitt 12, in die ebenfalls kegelstumpfförmige Unterseite 7 des Kopfs 4 über. Der kegelstumpfförmige Abschnitt 11 oder, sofern vorhanden, der zylindrische Abschnitt 12, bilden am Übergang zum Kopf 4 eine umlaufende Kehle zur Unterseite 7 des Kopfs 4, weil der kegelstumpfförmige Abschnitt 11 spitzwinkliger als die Unterseite 7 des Kopfs 4 ist. Der kegelstumpfförmige Abschnitt 11 und, sofern vorhanden, der zylindrische Abschnitt 12 des gewindelosen Schafts 8 sind an der Unterseite 7 des Kopfs 4 erkennbar und ein Hinweis auf die Herstellung der Schraube 6 mit dem erfindungsgemäßen Verfahren.

Ist die Schraube 6 mit ihrem Gewinde 3 in beispielsweise einen Ankergrund oder einen Dübel eingeschraubt, ist sie im Bereich des Gewindes 3 abgestützt, so dass im Bereich des Gewindes 3 kein Biegemoment wirkt. Wird die Schraube 6 am gewindelosen Schaft 8 und/oder am Kopf 4 mit einer Querkraft beaufschlagt, wird der Schaft 8 auf Biegung beansprucht. Deswegen ist eine hohe Biegesteifigkeit oder hohe Biegefestigkeit im Bereich des gewindelosen Schafts 8 der Schraube 6 wichtig. Für eine hohe Biegesteifigkeit ist wie bereits erläutert das Verhältnis von Zugfestigkeit Rₘ zur 0,2% Dehngrenze Rₚ 0,2 oder zur Streckgrenze Rₑ maßgeblich, wobei an Stelle der Streckgrenze Rₑ hier die 0,2% Dehngrenze Rₚ 0,2 verwendet wird. Die 0,2% Dehngrenze Rₚ 0,2 und mit ihr die Streckgrenze Rₑ des gewindelosen Schafts 8 der Schraube 6 werden durch die erfindungsgemäße Verkleinerung des Durchmessers des Schafts 8 nach dem Stauchen des Kopfs 4 erhöht.

Hat der gewindelose Schaft 8 der Schraube 6 nach dem Stauchen des Kopfs eine Zugfestigkeit Rₘ von 670 N/mm² und eine 0,2% Dehngrenze von R_{p 0},₂ von 430 N/mm², erhöht sich die 0,2% Dehngrenze R_{g 0.2} durch die Verkleinerung des Durchmessers des gewindelosen Schafts 8 um 0,1 mm bei nahezu unveränderter Zugfestigkeit auf 650 N/mm². Das bedeutet eine Erhöhung der Festigkeitsklasse der Schraube 6 von 7.6 auf 7.9!

Außer auf Schrauben ist das erfindungsgemäße Verfahren allgemein auf stiftförmige Befestigungselemente aus Metall anwendbar wie beispielsweise Spreizanker, Hülsenanker, Bolzenanker oder Ankerstangen. Wird an einem solchen stiftförmigen Befestigungselement durch Stauchen, also durch Druckumformen, beispielsweise ein Kopf, ein Flansch, ein umlaufender Wulst oder ein Spreizkegel geformt, und dabei das stiftförmige Befestigungselement bzw. ein Schaft des stiftförmigen Befestigungselements mit der Stauchkraft als Druckkraft beaufschlagt, kann durch die vorstehend anhand der Schraube 6 erläuterte Verkleinerung des Durchmessers durch Umformen die Streckgrenze und die 0,2% Dehngrenze und damit die Biegesteifigkeit erhöht werden. Der Durchmesser kann über die gesamte Länge oder über einen begrenzten, sich an den Kopf, Flansch, umlaufenden Wulst oder Spreizkegel anschließenden Abschnitt verkleinert werden.

### Bezugszeichenliste

- 1: Draht
- 2: gezogener Draht
- 3: Gewinde
- 4: Kopf
- 5: Kern
- 6: Schraube
- 7: Unterseite
- 8: gewindeloser Schaft
- 9: Matrize
- 10: Mündung
- 11: kegelstumpfförmiger Abschnitt
- 12: zylindrischer Abschnitt

## Patentansprüche

1. Verfahren zur Erhöhung einer Festigkeit eines stiftförmigen Befestigungselements aus Metall, an dem durch Stauchen eine Querschnittsvergrößerung geformt ist, wobei ausgehend von einem Walzdraht vor dem Stauchen der Querschnittsvergrößerung durch Zugumformen eine Streckgrenze und Zugfestigkeit des stiftförmigen Befestigungselements durch Zugumformen erhöht werden, **dadurch gekennzeichnet, dass** nach dem Stauchen durch ein Durchdrücken ein Querschnitt des stiftförmigen Befestigungselements (6) in einem an die Querschnittsvergrößerung anschließenden Längsbereich verkleinert wird.

2. Verfahren nach Anspruch 1, **dadurch gekennzeichnet, dass** der Querschnitt um 1-2% eines Quermessers verkleinert wird.

3. Verfahren nach einem der Ansprüche 1 oder 2, **dadurch gekennzeichnet, dass** das Befestigungselement eine Schraube (6) ist.

4. Verfahren nach Anspruch 3, **dadurch gekennzeichnet, dass** der Querschnitt eines Schafts (8) der herzustellenden Schraube (6) zwischen einem Kopf (4) und einem Gewinde (3) der Schraube (6) nach einem Stauchen des Kopfs (4) durch Umformen verkleinert wird.

5. Verfahren nach einem der vorhergehenden Ansprüche, **dadurch gekennzeichnet, dass** die Verkleinerung des Querschnitts mit kurzem Abstand von der Querschnittsvergrößerung endet.

## Claims

1. Method of increasing a strength of a rod-shaped fixing element made of metal, on which a cross-sectional enlargement has been formed by upset forging, wherein starting from a wire rod before upset forging of the cross-sectional enlargement by a tensile forming operation a yield point and tensile strength of the rod-shaped fixing element are increased by a tensile forming operation, **characterised in that** after the upset forging a cross-section of the rod-shaped fixing element (6) is reduced by a pushing-through operation in a longitudinal region adjacent to the cross-sectional enlargement.

2. Method according to claim 1, **characterised in that** the cross-section is reduced by 1 - 2 % of a transverse dimension.

3. Method according to one of claims 1 or 2, **characterised in that** the fixing element is a screw (6).

4. Method according to claim 3, **characterised in that** the cross-section of a shank (8) of the screw (6) being produced is reduced between a head (4) and a thread (3) of the screw (6) by a forming operation after upset forging of the head (4).

5. Method according to one of the preceding claims, **characterised in that** the reduction in cross-section terminates a short distance from the cross-sectional enlargement.

## Revendications

1. Procédé pour augmenter la résistance d'un élément de fixation métallique en forme de tige sur lequel une augmentation de section est formée par refoulement, sachant qu'en partant d'un fil métallique laminé, avant le refoulement de l'augmentation de section, la limite d'élasticité et la résistance à la traction de l'élément de fixation en forme de tige sont augmentées par déformation plastique par traction, **caractérisé en ce que**, après le refoulement, la section de l'élément de fixation (6) en forme de tige est, par extrusion, réduite dans une partie de la longueur faisant suite à l'augmentation de section.

2. Procédé selon la revendication 1, **caractérisé en ce que** la section est réduite de 1 à 2 % d'une mesure transversale.

3. Procédé selon l'une des revendications 1 ou 2, **caractérisé en ce que** l'élément de fixation est une vis (6).

4. Procédé selon la revendication 3, **caractérisé en ce que** la section d'un corps (8) de la vis (6) à fabriquer, entre une tête (4) et un filetage (3) de la vis (6), est réduite par déformation plastique après le refoulement de la tête (4).

5. Procédé selon l'une des revendications précédentes, **caractérisé en ce que** la réduction de la section se termine à courte distance de l'augmentation de section.
